# EUROPEAN PATENT SPECIFICATION

(11) **EP 3 805 100 B1**
(45) Date of publication and mention of the grant of the patent: **20.12.2023**
(21) Application number: 19201848.9
(22) Date of filing: 08.10.2019
(51) Int. Cl.: B64C 29/00, B64C 39/12

(54) **VTOL AIRCRAFT**
SENKRECHTSTART- UND -LANDEFLUGZEUG
AÉRONEF ADAV

(43) Date of publication of application: 14.04.2021
(73) Proprietor: Volare GmbH, 2340 Mödling (AT)
(72) Inventor: FÜRLINGER, Andreas, 1140 Wien (AT)
(74) Representative: Weiser & Voith Patentanwälte Partnerschaft

(56) References cited:
- EP-A1- 3 409 587
- WO-A1-2019/084487
- WO-A2-2006/113877
- US-A1- 2012 261 523

## Description

The present invention relates to a vertical take-off and landing (VTOL) aircraft, comprising a fuselage supporting two main wings between its nose and its tail, a first group of propulsion units mounted fixedly on the aircraft in a vertical thrust generating configuration, and a second group of propulsion units each of which is mounted on the aircraft configurable between a vertical thrust generating configuration and a horizontal thrust generating configuration, wherein the first group is subdivided into two front sets and a rear set, each of said front and rear sets including at least one propulsion unit, and the two front sets are mounted at opposite sides of the fuselage ahead of the main wings.

VTOL aircrafts of this kind, as described in, e.g., US 2007/0018035 A1, realize a hybrid approach combining vertical thrust elements for take-off and landing and horizontal thrust elements and fixed wings for efficient cruise. Some of the thrust elements may be switched between a vertical and a horizontal thrust generating configuration, e.g., by equipping ducted fans with pivotable baffles or mounting propellers or ducted fans pivotably on the fuselage. The latter necessitates a complex motion control, making the aircraft costly and introducing additional sources of possible failure.

US 2012/0261523 A1 describes a hybrid aircraft design with multiple propellers mounted pairwise on pivotable propeller supports on main wings, at the wing tips, at the nose or on the tail. By pivoting the propeller supports the propeller's thrust can be directed from a vertical towards a horizontal direction. In one embodiment additional fixed vertical thrusters are mounted at the wingtips and in a dedicated projecting tail structure.

WO 2006/113877 A2 discloses a hybrid aircraft design with fixed vertical thrusters mounted inside of main wings and canard wings and with jet engines at the aircraft's tail. The jet engines have deflecting baffles downstream which can be switched between horizontal and vertical thrust generation.

EP 3 409 587 A1 discloses another hybrid aircraft design with a fixed vertical thruster mounted inside the aircraft's fuselage between the wings and the empennage and with tiltable propellers at the wing tips.

In distributed propulsion systems, multiple thrust elements are arranged along main components like wing, fuselage and empennage. It is a challenge to place the thrust elements efficiently for optimal performance in both vertical and horizontal flight. Especially thrust elements which are only intended for vertical flight and not needed in horizontal flight are parasitic elements in a horizontal flight phase: The volumetric bodies are exposed to the airflow and therefore increase parasite drag and hence reduce performance, e.g., endurance, speed, etc., in horizontal flight.

Therefore, when designing a VTOL aircraft, numerous competing requirements have to be accounted for. The introduction of each and every element has to be considered carefully as it may entail additional mass, drag and/or necessary installation space. The additionally introduced mass and drag increase energy consumption and hence decrease endurance and/or range. Furthermore, the forms, positions and masses of the elements affect the aerodynamic stability of the aircraft by shifting the centre of mass and the neutral point of the aircraft. Considering all the above-mentioned competing requirements, finding optimal numbers and types of elements and their mutual arrangement is a delicate task. State of the art VTOL aircrafts with wings still lack an optimal trade-off between energy efficiency, aerodynamic stability, manoeuvrability and safety, which is critical in aviation.

It is an object of the present invention to overcome these limitations of the state of the art.

In a first aspect of the invention, this object is achieved with a VTOL aircraft of the type mentioned at the outset, which is characterized in that
the rear set is mounted in the fuselage, passing therethrough, abaft the main wings,
the second group is subdivided into a wing set and a tail set, each of said wing and tail sets including at least two propulsion units,
the at least two propulsion units of the wing set are mounted at opposite tips of the main wings, and
the at least two propulsion units of the tail set are mounted at opposite sides of the fuselage abaft the main wings.

The inventive arrangement of the propulsion units realizes an optimum in many aspects. With a set of main wings, a group of "fixed" propulsion units distributed along the fuselage for vertical thrust, and a small number of only four "configurable" propulsion units, i.e. which need to be motion controlled between vertical thrust for take-off and landing and horizontal thrust for cruise and can be used for stabilizing and controlling the aircraft around the centre of mass, the invention creates a VTOL aircraft that is highly efficient, controllable and safe in all operating modes.

In particular, integrating the fixed propulsion units of the rear set directly into the fuselage minimizes mass and parasitic drag as the propulsion units of the rear set are not exposed to the airflow during cruise flight. This integration additionally allows to reduce the drag of the fuselage by ingesting a boundary layer when the rear set propulsion units are thrusting with appropriate power setting in cruise mode. This eliminates the need of covers for the fixed propulsion units in cruise flight, which would increase complexity, part count and mass. At the same time this position allows to place "tail set" configurable propulsion units at the sides of the fuselage, unhindered by the "rear set" fixed propulsion units. The interference between the front sets, the main wings and the tail sets in cruise mode can be mitigated by placing them at different vertical positions. Mounting the front sets at the nose sides leaves ample room for a wide payload compartment therebetween. Splitting the fixed propulsion units of the first group into two front and one rear set allows for a three-point two-axis attitude control of roll and pitch in take-off and landing by these fixed propulsion units alone; and distributing the configurable propulsion units of the second group over wings, stern (tail), left and right allows for additional or alternative four-point two-axis control of roll and pitch when in the vertical thrust generating configuration, highly increasing safety and manoeuvrability. Mounting those second group propulsion units at the wing tips and at the sides of the fuselage rear provides large torque leverage for roll and pitch control. When in the vertical thrust generating configuration, the propulsion units at the wing tips can even provide yaw control in VTOL mode simply by tilting them slightly in opposite directions out of the vertical. When in the horizontal thrust generating configuration, the propulsion units at the wing tips can provide roll control simply by tilting them slightly out of the horizontal. The high manoeuvrability obtained by the propulsion units even allows to fully control the aircraft in cruise without the necessity of ailerons, elevators and/or rudders. Last but not least the aircraft excels in stability. The inventive arrangement of elements allows to have the centre of thrust in vertical flight close to the centre of mass. In addition, by balancing masses across the aircraft the centre of mass may be in front of the neutral point and close to the payload to avoid large pitch moment changes due to different payloads.

Summing up, the inventive design achieves an optimized trade-off between vertical and horizontal flight characteristics, in particular in terms of energy consumption and manoeuvrability, and creates a VTOL with improved safety, efficiency and speed.

In a preferred embodiment of the VTOL aircraft, the main wings are forward-swept, resulting in more fuselage space, e.g., for a payload compartment, in front of the anchoring (wing box) of the main wings. Any mass in the payload compartment shifts the centre of mass forward and compensates the forward shift of the neutral point due to the forward-sweep.

In an advantageous embodiment each front set of the VTOL aircraft may include at least two, preferably at least three, propulsion units which are arranged one after the other in a direction parallel to the longitudinal axis of the aircraft. This minimizes the frontal area of each front set and subsequently reduces its drag and its influence on the inflow to the main wings. The longitudinally arranged propulsion units of a front set may, e.g., be housed in an elongated pod or nacelle mounted as a single unit to the fuselage.

According to a further preferred feature of the invention each of the front sets may be mounted on the fuselage via a canard wing to generate additional lift and/or serve as an additional horizontal stabilizer. This is especially favourable in combination with elongated front sets which funnel the air flow between fuselage and front set and guide it over the canard wing.

The VTOL aircraft of the invention may be unloaded, e.g., unmanned, or loaded, e.g., manned. Preferably the VTOL aircraft is loaded and the fuselage has a payload compartment, e.g., a crew cabin. When employing forward-swept wings a larger payload compartment can be accommodated in front of the main wings.

In a preferred embodiment the payload compartment is detachable from the fuselage. This allows to preload a payload compartment for an aircraft and thus to reduce its downtime.

To exploit the space provided by the fuselage, the rear set preferably includes at least two, more preferably at least three, propulsion units. The multitude of propulsion units can be used for additional motion control as each unit has a different lever arm of thrust, allowing, e.g., to fine tune the torque exerted by the rear set for pitch control.

In a particularly preferred embodiment the multiple propulsion units of the rear set are arranged one after the other in a direction parallel to the longitudinal axis of the aircraft, to maximally exploit the elongated form of the fuselage rear.

Principally, the tail of the VTOL aircraft may have an empennage of any type known in the state of the art, e.g., a T-tail or inverted T-tail having vertical and horizontal stabilizers, optionally with separated rudders and elevators, or even no empennage at all. In a preferred embodiment of the invention the fuselage has a substantially V-shaped empennage at its tail, serving both as a horizontal and a vertical stabilizer, with optional combined rudder/elevator control surfaces.

With such a V-shaped empennage, it is especially advantageous when at least two propulsion units of the tail set are located below the empennage, making efficient use of the available installation space. Mounted in this way, the efficiency of the propulsion units allows to exert maximal torque for pitch control in vertical thrust configuration.

With a V-shaped empennage, preferably at least one of the fixed propulsion units of the rear set may also be located between the legs of the V, thus using the whole rear length of the fuselage for the rear set integration without being hindered by the empennage, which would not be possible with a conventional T- or inverted T-shaped tail.

The configurability of the propulsion units of the second group, which are adjustable between horizontal and vertical thrust, may be realized in many ways, e.g., by mounting pivotable baffles downstream of the propulsion units. However, in a favourable embodiment each of the propulsion units of the second group is mounted on the aircraft pivotable about a first axis which is substantially orthogonal to the longitudinal axis of the aircraft. This mounting enables a precise vectoring of the thrust individually for each propulsion unit, especially in the case of a multitude of lightweight electric propulsion units such as electrically driven ducted fans.

In VTOL operation, landing space is often limited, e.g., in mountainous or urban areas. To resolve this issue the aircraft preferably comprises foldable main wings, allowing for high aspect ratio wings in cruise and reduced lateral extension, e.g., reduced take-off and landing space, in VTOL mode.

In a preferred embodiment each of the propulsion units of the wing set is mounted on the aircraft also pivotable about a second axis which is substantially parallel to the longitudinal axis of the aircraft. This additional degree of freedom allows for additional motion control and - in combination with foldable wings - to maintain a vertical thrust generation even during folding or unfolding of the wings.

Any type of propulsion units can be used for the propulsion units of the VTOL aircraft of the invention, for example piston engines with propellers, jet turbines, turboprop engines, etc. The inventive design is, however, particularly suited for ducted fans, in particular electrically driven ducted fans, which excel in efficiency, scalability and low noise. Ducted fans provide a high thrust to installation space ratio such that a multitude of such engines can be used in the front, rear, wing and tail sets of the invention, fitting the available space in the sets as best as possible. In addition ducted fans reduce rotor noise and enhance user safety outside of the aircraft. Using electrically driven ducted fans achieves a low complexity and ease of energy supply by flexible electrical cabling.

In a second aspect the invention provides for a method of operating the disclosed VTOL aircraft. According to one embodiment of this method, the propulsion units of the first and second group are activated, when the aircraft is landing or taking off, and the propulsion units of the first group are deactivated and the propulsion units of the second group are activated, when the aircraft is cruising. In the inventive method the wings produce sufficient lift to compensate for the deactivated fixed propulsion units of the first group such that power consumption in cruise mode is significantly reduced. Hence, the range or endurance, respectively, of the aircraft is increased. However, optionally, the fixed propulsion units of the aircraft can also be operated with an appropriate power setting in cruise mode, e.g., at a slow rate, to reduce drag by actively controlling the airflow around respective bodies, e.g., by a boundary layer ingestion.

In a preferred embodiment of the inventive method the propulsion units of the second group are in the vertical thrust generating configuration, when the aircraft is landing or taking-off, and in the horizontal thrust generating configuration, when the aircraft is cruising, resulting in maximal vertical or horizontal thrust, respectively.

The invention shall now be explained in more detail below on the basis of a preferred exemplary embodiment thereof with reference to the accompanying drawings, in which show:
Fig. 1 a VTOL aircraft according to the invention in cruise mode in a front perspective view from above;
Fig. 2 the aircraft of Fig. 1 in VTOL mode in a front perspective view from above; and
Fig. 3 the aircraft of Fig. 1 in a landed position in a front perspective view from above; and
Fig. 4 the aircraft of Fig. 1 in a landed position with a detached payload compartment in a perspective side view.

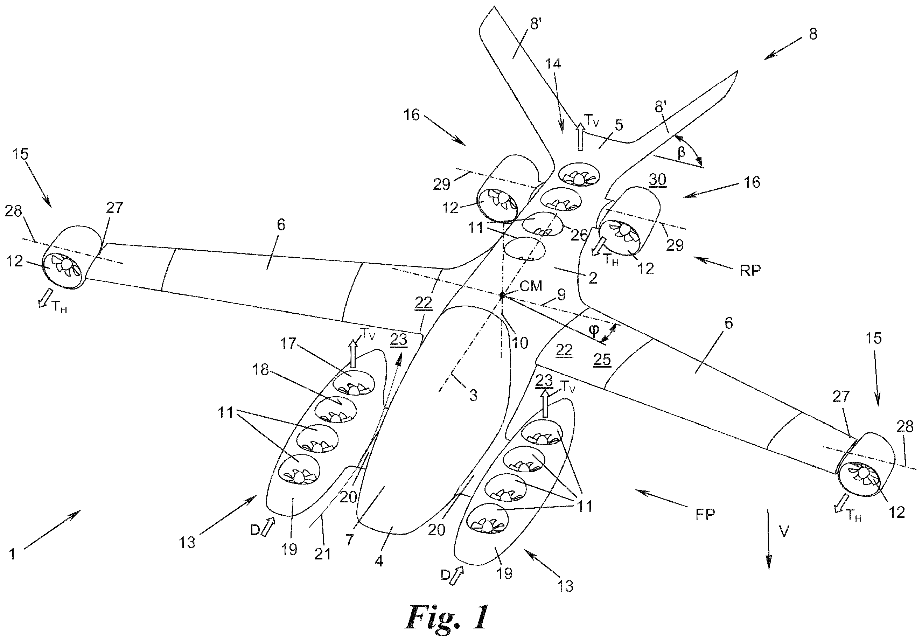

As shown in Figs. 1 - 3, an aircraft 1 comprises a fuselage 2 with a longitudinal axis 3, a nose 4 and a tail 5. Between nose 4 and tail 5 two main wings 6 are attached laterally to the fuselage 2. The fuselage 2 has a payload compartment 7 ahead of the main wings 6 in a front part FP of the aircraft 1 and a V-shaped empennage 8 in a rear part RP behind the main wings 6. The aircraft 1 may be loaded, e.g., manned, or unloaded, e.g., unmanned, in the latter case the payload compartment 7 is optional. If the aircraft 1 is stabilized by the propulsion units, it may have no empennage 8 at all.

The aircraft 1 is capable of fast cruise along the longitudinal axis 3 and of vertical take-off and landing (VTOL) in a vertical direction V. In addition to translatory movements the aircraft 1 can rotate about a centre of mass CM around the longitudinal axis 3 as "roll" axis, around a lateral axis 9 as "pitch" axis, and around a thereto orthogonal "yaw" axis 10. In straight and level flight, the longitudinal (roll) and lateral (pitch) axes 3, 9 are horizontal and the yaw axis 10 is vertical, i.e. parallel to the vertical direction V. However, it goes without saying that the roll, pitch and yaw axes 3, 9, 10 rotate with the aircraft 1 in flight. Therefore, in the present disclosure terms such as "horizontal", "vertical", "up", "down", "high", "low", etc. refer to straight and level flight of the aircraft 1.

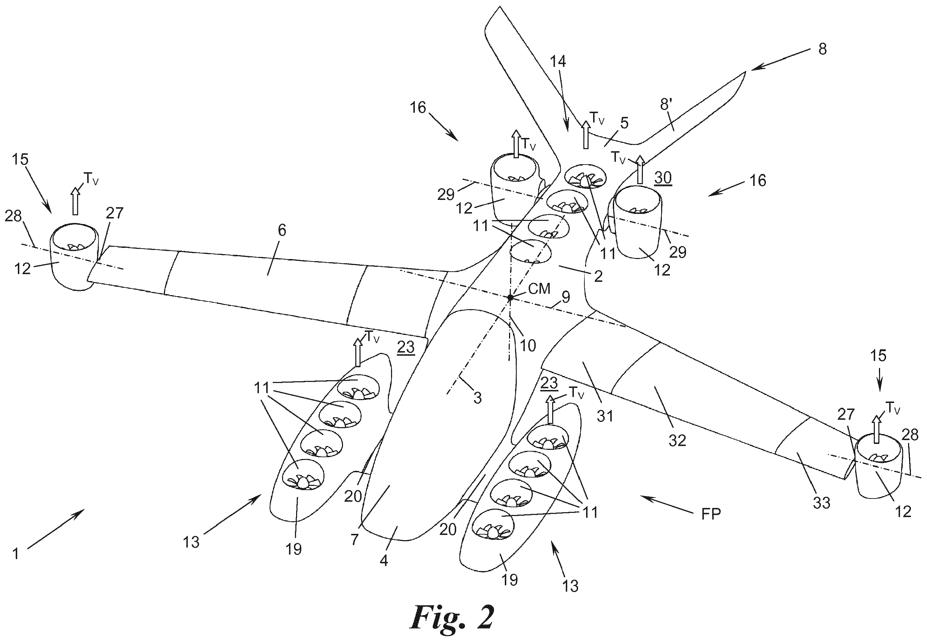

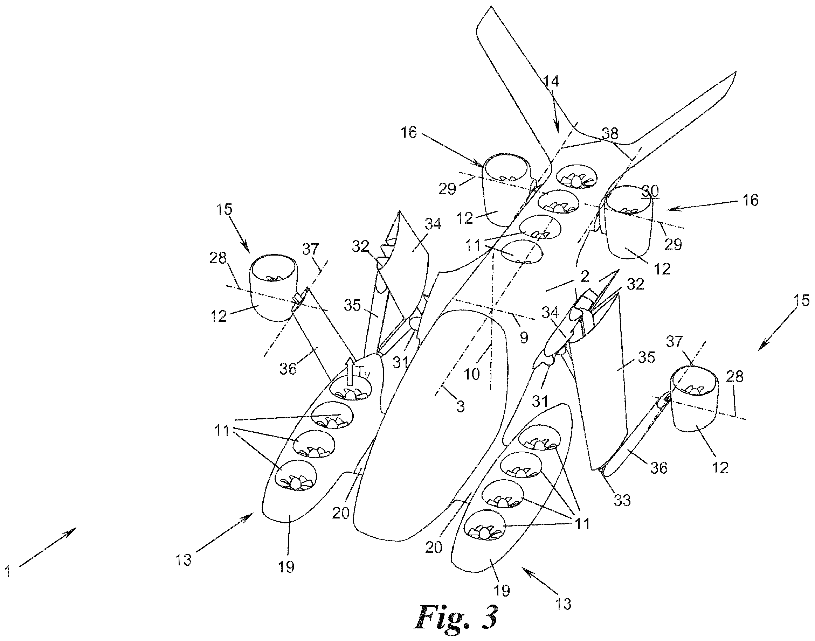

For generating thrust the aircraft 1 comprises a multitude of propulsion units 11, 12 which can be basically grouped into two front sets 13, a rear set 14, a wing set 15, and a tail set 16. Some of the propulsion units 11, 12 are mounted fixedly on the aircraft 1 to generate "vertical" thrust T_{V}, i.e., thrust parallel to the yaw axis 10 and hence vertical in straight and level flight, see the propulsion units 11 of the front and rear sets 13 and 14. Other ones of the propulsion units 11, 12 are mounted pivotally - or are at least configurable - on the aircraft 1 between a first position or configuration, respectively, in which they generate "horizontal" thrust T_{H}, i.e., thrust parallel to the longitudinal axis 3 and hence horizontal in straight and level flight, see the propulsion units 12 of the wing and tail sets 15, 16 in Fig. 1, and a second position or configuration, respectively, in which they generate "vertical" thrust T_{V} as defined above, see the propulsion units 12 of the wing and tail sets 15, 16 in Figs. 2 and 3.

In the embodiment shown in Figs. 1 - 3 all the propulsion units 11, 12 are electrically driven ducted fans comprising a rotor 17 surrounded by a mantle 18 for enhanced safety and reduced noise. In general, the propulsion units 11, 12 may be of any type known in the art, e.g., piston engines driving propellers, jet or turbine engines driving propellers ("turboprops") or jets ("jet engines"), etc. and could, e.g., be different in each set 13 - 16 or even be mixed within a set 13 - 16.

The front sets 13 of fixed propulsion units 11 are mounted at opposite sides of the fuselage 2 in the front part FP ahead of and lower than the main wings 6. Alternatively, the front sets 13 may be mounted higher than or roughly at the same height as the main wings 6.

In the present example each front set 13 has four propulsion units 11 which are arranged one after the other parallel to the longitudinal axis 3 and are integrated into a nacelle, gondola, or pod 19. There can be any number of propulsion units 11 in a front set 13, e.g., one, two, three, five or more.

Each pod 19 is mounted on the fuselage 2 via a canard wing 20. The canard wing 20 can be connected to the fuselage 2 on the one hand and to the pod 19 on the other hand via any suitable means, e.g., integrally formed, bolted, riveted, welded, etc. In simple embodiments the pods 19 could be mounted directly on the fuselage 2, i.e. without canard wings 20.

The pods 19 have a streamlined shape as shown to minimize air resistance (drag) D in cruise (Fig. 1). In combination with the nose sides of the fuselage 2 the pods 19 help to funnel the inflow of air 21 therebetween and to guide it over the canard wings 20.

The main wings 6 of the aircraft 1 may be forward-swept at an acute negative angle ϕ with respect to the lateral axis 9. Alternatively, the main wings 6 may have no sweep (sweep angle ϕ = O) or a backward sweep with a positive sweep angle ϕ.

The forward sweep of the main wings 6 creates a gusset 23 in front of each main wing 6 between the main wing 6 and the fuselage 2 when looking in the vertical direction V. The gussets 23 can be used to accommodate particularly long front sets 13 or pods 19, i.e., each front set 13 can extend into the respective gusset 23 when seen in the vertical direction V.

In addition, the forward sweep of the main wings 6 allows for a large longitudinal extent of the payload compartment 7, as any support structures of the main wings 6 which traverse the fuselage 2, such as a wing spar, are more aft than in the case of zero-swept or rearward-swept main wings 6.

In alternative variants (not shown) the fixed propulsion units 11 of the front sets 13 may not be integrated into pods 19 and be directly connected to the canard wings 20 or the fuselage 2. Or, each front set 13 could as well comprise multiple pods 19 in parallel or in series. Any combination of numbers, shapes and arrangements of pods 19, canard wings 20 and propulsion units 11 in the front sets 13 is possible.

The rear set 14 of fixed propulsion units 11 is mounted abaft the main wings 6 in the elongated rear part RP of the fuselage 2. The propulsion units 11 within the rear set 14 are arranged one after the other parallel to the longitudinal axis 3, covering the whole rear part RP of the fuselage 2. The propulsion units 11 may be integrated directly into the fuselage 2 by mounting their rotors 17 in openings 26 which pass through the fuselage 2 parallel to the yaw axis 10. The walls of the openings 26 then serve as the mantle 18 of propulsion units 11 in the form of ducted fans.

For a full utilization of the rear part RP of the aircraft 1 one or more of the rear set propulsion units 11 closest to the tail 5 may be located between the V-legs 8' of the V-shaped empennage 8. If other forms of empennages 8 are used, e.g., T-shaped or inverted-T-shaped empennages 8 with a central vertical stabilizer (not shown), the propulsion units 11 of the rear set 14 may be arranged on both sides of the vertical stabilizer or hold short of the vertical stabilizer.

In general, the propulsion units 11 of the rear set 14 may be arranged in the rear part RP of the fuselage 2 in any pattern, e.g., in two or more rows, and there may be any number of propulsion units 11 in the rear set 14, e.g., one, two, three or more than four.

The wing set 15 comprises (at least) two propulsion units 12 each of which is mounted at the tip 27 of one of the main wings 6. Each wing set propulsion unit 12 is articulated on the respective wing tip 18 at least about an axis 28 substantially parallel to the lateral axis 9 so that it can be pivoted between its horizontal thrust generating configuration (Fig. 1) and its vertical thrust generating configuration (Figs. 2, 3). For the configurability of the thrust other variants of thrust vectoring are conceivable, e.g., fixedly mounted fans or jets equipped with pivotable baffles downstream, or the like. Also, the wing set 15 could comprise more than one propulsion unit 12 per main wing 6, wherein the propulsion units 12 of a main wing 6 may be mounted thereon individually pivotable or pivotable as a group.

Similarly, the tail set 16 comprises (at least) two propulsion units 12 mounted at opposite sides of the rear part RP of the fuselage 2 abaft the main wings 6 and higher or lower than the main wings 6. Alternatively, the tail set 16 may be mounted roughly at the same height as the main wings 6 or at the empennage 8, e.g., at the tips of its legs 8'.

Each tail set propulsion unit 12 is articulated on the respective fuselage side about an axis 29 which is substantially parallel to the lateral axis 9 so that it can be pivoted between its horizontal thrust generating configuration (Fig. 1) and its vertical thrust generating configuration (Figs. 2 and 3). Again, for the configurability of the thrust other variants of thrust vectoring are conceivable, e.g., fixedly mounted fans or jets equipped with pivotable baffles downstream, or the like.

The propulsion units 12 of the tail set 16 may be mounted below the V-legs 8' of the V-shaped empennage 8. The inclination β of each V-leg 8' may provide a wedge-shaped clearance 30 to the respective propulsion unit 12, if mounted below the V-leg 8', and thus an unhindered inflow of air thereto, even in the vertical thrust generating position. In case of a T-shaped empennage 8 the tail set propulsion units 12 could be longitudinally off-set or mounted with sufficient vertical clearance thereto.

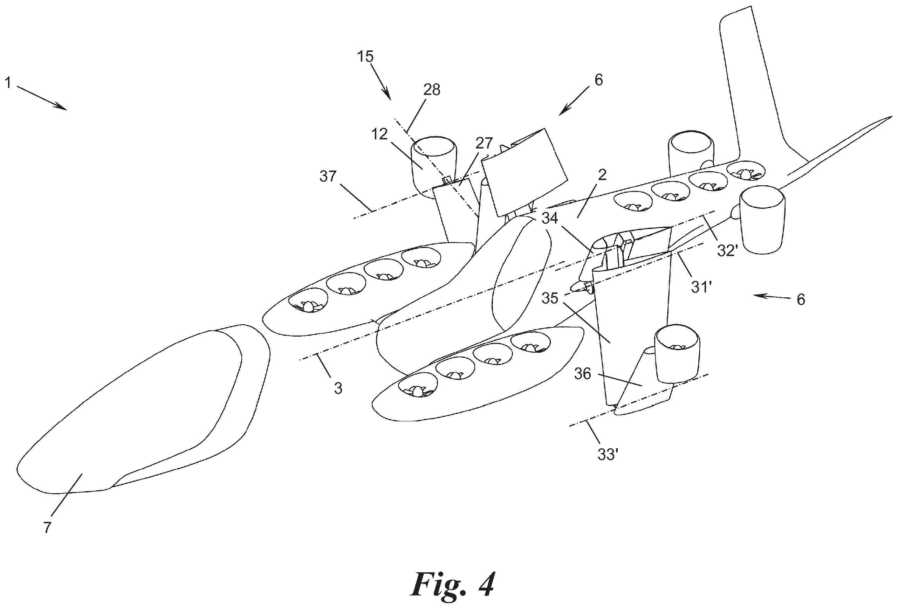

Fig. 3 shows a landing or parking configuration of the aircraft 1 wherein the main wings 6 have been folded in zig-zag form along hinges 31, 32, 33 about three axes 31', 32', 33' substantially parallel to the longitudinal axis 3 (Fig. 4) which segment each main wing 6 into a root segment 34, a middle segment 35 and a tip segment 36. Of course, each wing 6 could be segmented into less or more than three segments 34 - 36 by less or more than three hinges 31 - 33. The segments 34 - 36 can additionally comprise flight control elements like ailerons, flaps, spoilers, slats, etc.

In the folded configuration of Figs. 3 and 4, the (one or more) propulsion unit 12 mounted at the tip 27 of a main wing 6 would follow the rotational movement of the tip segment 36. To still enable a vertical thrust generating configuration of the wing set propulsion units 12 in this folded stage, the propulsion units 12 of the wing sets 15 are further articulated on the respective wing tip 27 about a further axis 37 which is substantially parallel to the longitudinal axis 3.

The two degrees of freedom of the wing set propulsion units 12 around the pivot axes 28 and 37 can be used not only for generating vertical thrust in the unfolded configuration of Figs. 1 and 2 and the folded configuration of Figs. 3 and 4 but also for translatory and rotary manoeuvring in take-off, hovering and landing (Figs. 2, 3) by slightly tilting the thrust vectors T_{V} out of the vertical. The same can be done with the configurable propulsion units 12 of the tail set 16. To this end, the tail set propulsion units 12 may also be articulated about respective second axes 38 which are substantially parallel to the longitudinal axis 3.

An exemplary mode of operation of the aircraft 1 in cruise (Fig. 1), unfolded in vertical flight (Fig. 2) and folded in vertical flight (Fig. 3) and landed (Figs. 3 and 4) is as follows. The configurable propulsion units 12 of the wing and tail sets 15, 16 are in their horizontal thrust generating configurations when the aircraft 1 is cruising (Fig. 1), and in their vertical thrust generating configurations when the aircraft 1 is taking-off, hovering or landing, be it in an unfolded (Fig. 2) or folded (Figs. 3 and 4) stage. The fixed propulsion units 11 of the front and rear sets 13, 14 may be activated when the aircraft 1 is taking-off, hovering or landing, be it in the unfolded (Fig. 2) or folded (Figs. 3 and 4) stage, and may be deactivated when the aircraft 1 is cruising (Fig. 1). In cruise, the main wings 6 and the optional canard wings 20 generate enough lift to compensate for the deactivated fixed propulsion units 11, thus saving energy.

Optionally, the propulsion units 11 of the front and rear sets 13, 14 may also be operated in cruise mode to ingest a boundary layer which is formed on the upper surface of the pods 19 for the front sets 13 or on the upper surface of the fuselage 2 for the rear set 14, to reduce parasitic drag.

Fig. 4 shows the landed aircraft 1 with folded main wings 6 and the detachable payload compartment 7 being removed from the fuselage 2. The payload compartment 7 may, e.g., be preloaded on an airport and quickly attached to the fuselage 2 of an aircraft 1 without payload compartment 7, to reduce the downtime of the aircraft 1. Alternatively, the payload compartment 7 could be detached while the aircraft 1 is hovering so that the required parking space corresponds to the size of the payload compartment 7. In variants with a payload compartment 7 protruding the pods 19, the parking space of the aircraft 1 without payload compartment 7 is reduced, too.

The invention is not restricted to the specific embodiments described above but encompasses all variants, modifications and combinations thereof that fall within the scope of the appended claims.

## Claims

1. Vertical take-off and landing, VTOL, aircraft (1), comprising:
a fuselage (2) supporting two main wings (6) between its nose (4) and its tail (5),
a first group of propulsion units (11) mounted fixedly on the aircraft (1) in a vertical thrust generating configuration, and
a second group of propulsion units (12) each of which is mounted on the aircraft (1) configurable between a vertical thrust generating configuration and a horizontal thrust generating configuration,
wherein the first group is subdivided into two front sets (13) and a rear set (14), each of said front and rear sets (13, 14) including at least one propulsion unit (11), and
the two front sets (13) are mounted at opposite sides of the fuselage (2) ahead of the main wings (6),
**characterized in that**
the rear set (14) is mounted in the fuselage (2), passing therethrough, abaft the main wings (6),
the second group is subdivided into a wing set (15) and a tail set (16), each of said wing and tail sets (15, 16) including at least two propulsion units (12),
the at least two propulsion units (12) of the wing set (15) are mounted at opposite tips (27) of the main wings (6), and
the at least two propulsion units (12) of the tail set (16) are mounted at opposite sides of the fuselage (2) abaft the main wings (6).

2. VTOL aircraft according to claim 1, **characterized in that** the main wings (6) are forward-swept.

3. VTOL aircraft according to claim 2, **characterized in that** each front set (13) extends into a gusset (23) formed between the respective main wing (6) and the fuselage (2) when seen in vertical direction (V).

4. VTOL aircraft according to any one of the claims 1 to 3, **characterized in that** each of said front sets (13) includes at least two, preferably at least three, propulsion units (11) which are arranged one after the other in a direction parallel to the longitudinal axis (3) of the aircraft (1).

5. VTOL aircraft according to any one of the claims 1 to 4, **characterized in that** each of said front sets (13) is mounted on the fuselage (2) via a canard wing (20).

6. VTOL aircraft according to any one of the claims 1 to 5, **characterized in that** the fuselage (2) has a payload compartment (7) between its nose (4) and the main wings (6).

7. VTOL aircraft according to claim 6, **characterized in that** the payload compartment (7) is detachable from the fuselage (2).

8. VTOL aircraft according to any one of the claims 1 to 7, **characterized in that** the rear set (14) includes at least two, preferably at least three, propulsion units (11), preferably arranged one after the other in a direction parallel to the longitudinal axis (3) of the aircraft (1).

9. VTOL aircraft according to any one of the claims 1 to 8, **characterized in that** the fuselage (2) has a substantially V-shaped empennage (8) at its tail (5).

10. VTOL aircraft according to claim 9, **characterized in that** at least two propulsion units (12) of the tail set (16) are located below the empennage (8).

11. VTOL aircraft according to claim 9 or 10, **characterized in that** at least one propulsion unit (11) of the rear set (14) is located between legs (8') of the V of the empennage (8) .

12. VTOL aircraft according to any one of the claims 1 to 11, **characterized in that** each of the propulsion units (12) of the second group is mounted on the aircraft (1) pivotable about a first axis (28) which is substantially orthogonal to the longitudinal axis (3) of the aircraft (1).

13. VTOL aircraft according to any one of the claims 1 to 12, **characterized in that** the main wings (6) are foldable.

14. VTOL aircraft according to any one of the claims 1 to 13, **characterized in that** each of the propulsion units (12) of the wing set (15) is mounted on the aircraft (1) also pivotable about a second axis (37) which is substantially parallel to the longitudinal axis (3) of the aircraft (1).

15. VTOL aircraft according to any one of the claims 1 to 14, **characterized in that** at least one of the propulsion units (11, 12) is a ducted fan, preferably an electrically driven ducted fan.

16. Method of operating a VTOL aircraft according to any one of the claims 1 to 15, **characterized in that** the propulsion units (11, 12) of the first and second group are activated, when the aircraft (1) is landing or taking off, and the propulsion units (11) of the first group are deactivated and the propulsion units (12) of the second group are activated, when the aircraft (1) is cruising.

17. Method according to claim 16, **characterized in that** the propulsion units (12) of the second group are in the vertical thrust generating configuration, when the aircraft (1) is landing or taking off, and in the horizontal thrust generating configuration, when the aircraft (1) is cruising.

## Patentansprüche

1. Flugzeug für Senkrechtstart und -landung, VTOL-Flugzeug (1), umfassend:
einen Rumpf (2), der zwei Hauptflügel (6) zwischen seinem Bug (4) und seinem Heck (5) trägt,
eine erste Gruppe von Antriebseinheiten (11), die fest am Flugzeug (1) in einer Konfiguration zur Erzeugung von vertikalem Schub montiert sind, und
eine zweite Gruppe von Antriebseinheiten (12), von denen jede am Flugzeug (1) verstellbar zwischen einer Konfiguration zur Erzeugung von vertikalem Schub und einer Konfiguration zur Erzeugung von horizontalen Schub montiert ist,
wobei die erste Gruppe in zwei vordere Sätze (13) und einen hinteren Satz (14) unterteilt ist, wobei jeder dieser vorderen und hinteren Sätze (13, 14) zumindest eine Antriebseinheit (11) enthält, und
die beiden vorderen Sätze (13) an gegenüberliegenden Seiten des Rumpfes (2) vor den Hauptflügeln (6) montiert sind,
**dadurch gekennzeichnet, dass**
der hintere Satz (14) im Rumpf (2) diesen durchdringend hinter den Hauptflügeln (6) montiert ist,
die zweite Gruppe in einen Flügelsatz (15) und einen Hecksatz (16) unterteilt ist, wobei jeder dieser Flügel- und Hecksätze (15, 16) zumindest zwei Antriebseinheiten (12) enthält,
die zumindest zwei Antriebseinheiten (12) des Flügelsatzes (15) an gegenüberliegenden Spitzen (27) der Hauptflügel (6) montiert sind, und
die zumindest zwei Antriebseinheiten (12) des Hecksatzes (16) an gegenüberliegenden Seiten des Rumpfes (2) hinter den Hauptflügeln (6) montiert sind.

2. VTOL-Flugzeug nach Anspruch 1, **dadurch gekennzeichnet, dass** die Hauptflügel (6) vorwärts gepfeilt sind.

3. VTOL-Flugzeug nach Anspruch 2, **dadurch gekennzeichnet, dass** jeder vordere Satz (13) in einen Zwickel (23) hineinreicht, der sich in vertikaler Richtung gesehen zwischen dem jeweiligen Hauptflügel (6) und dem Rumpf (2) bildet.

4. VTOL-Flugzeug nach einem der Ansprüche 1 bis 3, **dadurch gekennzeichnet, dass** jeder der vorderen Sätze (13) zumindest zwei, vorzugsweise zumindest drei, Antriebseinheiten (11) enthält, die hintereinander in Richtung der Längsachse (3) des Flugzeugs (1) angeordnet sind.

5. VTOL-Flugzeug nach einem der Ansprüche 1 bis 4, **dadurch gekennzeichnet, dass** jeder der vorderen Sätze (13) am Rumpf (2) über einen Canard-Flügel (20) montiert ist.

6. VTOL-Flugzeug nach einem der Ansprüche 1 bis 5, **dadurch gekennzeichnet, dass** der Rumpf (2) einen Nutzlastraum (7) zwischen seinem Bug (4) und den Hauptflügeln (6) aufweist.

7. VTOL-Flugzeug nach Anspruch 6, **dadurch gekennzeichnet, dass** der Nutzlastraum (7) vom Rumpf (2) abnehmbar ist.

8. VTOL-Flugzeug nach einem der Ansprüche 1 bis 7, **dadurch gekennzeichnet, dass** der hintere Satz (14) zumindest zwei, vorzugsweise zumindest drei, Antriebseinheiten (11) enthält, die vorzugsweise hintereinander in Richtung der Längsachse (3) des Flugzeugs (1) angeordnet sind.

9. VTOL-Flugzeug nach einem der Ansprüche 1 bis 8, **dadurch gekennzeichnet, dass** der Rumpf (2) an seinem Heck (5) ein V-förmiges Leitwerk (8) aufweist.

10. VTOL-Flugzeug nach Anspruch 9, **dadurch gekennzeichnet, dass** zumindest zwei Antriebseinheiten (12) des Hecksatzes (16) unterhalb des Leitwerks (8) angeordnet sind.

11. VTOL-Flugzeug nach Anspruch 9 oder 10, **dadurch gekennzeichnet, dass** zumindest eine Antriebseinheit (11) des hinteren Satzes (14) zwischen den Schenkeln (8') des V-förmigen Leitwerks (8) angeordnet ist.

12. VTOL-Flugzeug nach einem der Ansprüche 1 bis 11, **dadurch gekennzeichnet, dass** jede der Antriebseinheiten (12) der zweiten Gruppe am Flugzeug (1) um eine erste Achse (28) schwenkbar montiert ist, die im Wesentlichen orthogonal zur Längsachse (3) des Flugzeugs (1) liegt.

13. VTOL-Flugzeug nach einem der Ansprüche 1 bis 12, **dadurch gekennzeichnet, dass** die Hauptflügel (6) faltbar sind.

14. VTOL-Flugzeug nach einem der Ansprüche 1 bis 13, **dadurch gekennzeichnet, dass** jede der Antriebseinheiten (12) des Flügelsatzes (15) am Flugzeug (1) auch um eine zweite Achse (37) schwenkbar montiert ist, die im Wesentlichen parallel zur Längsachse (3) des Flugzeugs (1) liegt.

15. VTOL-Flugzeug nach einem der Ansprüche 1 bis 14, **dadurch gekennzeichnet, dass** zumindest eine der Antriebseinheiten (11, 12) ein Mantelpropeller ist, vorzugsweise ein elektrisch betriebener Mantelpropeller.

16. Verfahren zum Betreiben eines VTOL-Flugzeugs nach einem der Ansprüche 1 bis 15, **dadurch gekennzeichnet, dass** die Antriebseinheiten (11, 12) der ersten und zweiten Gruppe aktiviert werden, wenn das Flugzeug (1) startet oder landet, und die Antriebseinheiten (11) der ersten Gruppe deaktiviert und die Antriebseinheiten (12) der zweiten Gruppe aktiviert werden, wenn das Flugzeug (1) in der Luft ist.

17. Verfahren nach Anspruch 16, **dadurch gekennzeichnet, dass** die Antriebseinheiten (12) der zweiten Gruppe in der Konfiguration zur Erzeugung von vertikalem Schub sind, wenn das Flugzeug (1) startet oder landet, und in der Konfiguration zur Erzeugung von horizontalem Schub, wenn das Flugzeug (1) in der Luft ist.

## Revendications

1. Aéronef à décollage et atterrissage vertical ou VTOL (1), comprenant :
un fuselage (2) soutenant deux ailes principales (6) entre son nez (4) et sa queue (5),
un premier groupe d'unités de propulsion (11) montées de manière fixe sur l'aéronef (1) dans une configuration générant une poussée verticale, et
un second groupe d'unités de propulsion (12) dont chacune est montée sur l'aéronef (1) de manière configurable entre une configuration générant une poussée verticale et une configuration générant une poussée horizontale,
dans lequel le premier groupe est subdivisé en deux ensembles avant (13) et un ensemble arrière (14), chacun desdits ensembles avant et arrière (13, 14) incluant au moins une unité de propulsion (11), et
les deux ensembles avant (13) sont montés sur des côtés opposés du fuselage (2) devant les ailes principales (6),
**caractérisé en ce que**
l'ensemble arrière (14) est monté dans le fuselage (2), le passant à travers, sur l'arrière des ailes principales (6),
le second groupe est subdivisé en un ensemble d'ailes (15) et un ensemble de queue (16), chacun desdits ensembles d'ailes et de queue (15, 16) incluant au moins deux unités de propulsion (12),
les au moins deux unités de propulsion (12) de l'ensemble d'ailes (15) sont montées au niveau de pointes opposées (27) des ailes principales (6), et
les au moins deux unités de propulsion (12) de l'ensemble de queue (16) sont montées sur des côtés opposés du fuselage (2) sur l'arrière des ailes principales (6).

2. Aéronef VTOL selon la revendication 1, **caractérisé en ce que** les ailes principales (6) sont en flèche inversée.

3. Aéronef VTOL selon la revendication 2, **caractérisé en ce que** chaque ensemble avant (13) s'étend en un gousset (23) formé entre l'aile principale (6) correspondante et le fuselage (2) vus dans une direction verticale (V).

4. Aéronef VTOL selon l'une quelconque des revendications 1 à 3, **caractérisé en ce que** chacun desdits ensembles avant (13) inclut au moins deux, de préférence au moins trois, unités de propulsion (11) qui sont disposées l'une après l'autre dans une direction parallèle à l'axe longitudinal (3) de l'aéronef (1).

5. Aéronef VTOL selon l'une quelconque des revendications 1 à 4, **caractérisé en ce que** chacun desdits ensembles avant (13) est monté sur le fuselage (2) via une aile canard (20).

6. Aéronef VTOL selon l'une quelconque des revendications 1 à 5, **caractérisé en ce que** le fuselage (2) a un compartiment de charge utile (7) entre son nez (4) et les ailes principales (6).

7. Aéronef VTOL selon la revendication 6, **caractérisé en ce que** le compartiment de charge utile (7) est détachable du fuselage (2).

8. Aéronef VTOL selon l'une quelconque des revendications 1 à 7, **caractérisé en ce que** l'ensemble arrière (14) inclut au moins deux, de préférence au moins trois, unités de propulsion (11), préférentiellement disposées l'une après l'autre dans une direction parallèle à l'axe longitudinal (3) de l'aéronef (1).

9. Aéronef VTOL selon l'une quelconque des revendications 1 à 8, **caractérisé en ce que** le fuselage (2) a un empennage essentiellement en forme de V (8) au niveau de sa queue (5).

10. Aéronef VTOL selon la revendication 9, **caractérisé en ce qu'**au moins deux unités de propulsion (12) de l'ensemble de queue (16) sont situées sous l'empennage (8).

11. Aéronef VTOL selon la revendication 9 ou 10, **caractérisé en ce qu'**au moins une unité de propulsion (11) de l'ensemble arrière (14) est située entre les bras (8') du V de l'empennage (8).

12. Aéronef VTOL selon l'une quelconque des revendications 1 à 11, **caractérisé en ce que** chacune des unités de propulsion (12) du second groupe est montée sur l'aéronef (1) de manière pivotante autour d'un premier axe (28) qui est essentiellement orthogonal à l'axe longitudinal (3) de l'aéronef (1).

13. Aéronef VTOL selon l'une quelconque des revendications 1 à 12, **caractérisé en ce que** les ailes principales (6) sont repliables.

14. Aéronef VTOL selon l'une quelconque des revendications 1 à 13, **caractérisé en ce que** chacune des unités de propulsion (12) de l'ensemble d'ailes (15) est montée sur l'aéronef (1) de manière également pivotante autour d'un second axe (37) qui est essentiellement parallèle à l'axe longitudinal (3) de l'aéronef (1).

15. Aéronef VTOL selon l'une quelconque des revendications 1 à 14, **caractérisé en ce qu'**au moins une des unités de propulsion (11, 12) est une hélice carénée, de préférence une hélice carénée à entraînement électrique.

16. Procédé d'opération d'un aéronef VTOL selon l'une quelconque des revendications 1 à 15, **caractérisé en ce que** les unités de propulsion (11, 12) du premier et du second groupe sont activées, lorsque l'aéronef (1) décolle ou atterrit, et les unités de propulsion (11) du premier groupe sont désactivées et les unités de propulsion (12) du second groupe sont activées, lorsque l'aéronef (1) est en vol de croisière.

17. Procédé selon la revendication 16, **caractérisé en ce que** les unités de propulsion (12) du second groupe sont dans la configuration de génération de poussée verticale, lorsque l'aéronef (1) atterrit ou décolle, et dans la configuration de génération de poussée horizontale, lorsque l'aéronef (1) est en vol de croisière.
